Europäisches Patentamt

European Patent Office

Office européen des brevets

(19)

(11) EP 1 248 436 A2

(12) EUROPEAN PATENT APPLICATION

(43) Date of publication:
09.10.2002 Bulletin 2002/41

(51) Int Cl.⁷: H04L 29/06

(21) Application number: 02007667.5

(22) Date of filing: 04.04.2002

(84) Designated Contracting States:
AT BE CH CY DE DK ES FI FR GB GR IE IT LI LU
MC NL PT SE TR
Designated Extension States:
AL LT LV MK RO SI

(30) Priority: 07.04.2001 GB 0108791

(71) Applicant: Pace Micro Technology PLC
Saltaire, Shipley, BD18 3LF (GB)

(72) Inventor: Macleod, Scott
Rastrick, Brighouse HD6 3EG (GB)

(74) Representative: Wood, Graham
Bailey Walsh & Co,
5 York Place
Leeds LS1 2SD (GB)

(54) **Improvements to data transfer networks**

(57)  A data transfer network is provided comprising a TFTP server connected in a manner to allow the transfer of data to and from a number of network devices connected to the network. The network devices have a unique address including one or more digits for identifying each of the devices within the network. The data is transferred between the server and each of the devices at a pre-determined time and the method for calculating this time is calculated by inputting one or more digits from the unique address of the device into a random number generator.

EP 1 248 436 A2

**Description**

This invention relates to the improvement of transferring data between a server known as a Trivial File Transfer Protocol (TFTP) server and a number of networked devices communicating with the TFTP server.

Although the following description relates almost exclusively to the transfer of data between a TFTP server and a number of broadcast data receivers forming part of a network, it will be appreciated by persons skilled in the art that the invention can apply to any networked device requiring the transfer of information between itself and a server.

Broadcast data receivers (BDRs), also referred to as set top boxes, form part of television systems and are typically connected to or are integral with a display screen. The BDRs receive digital data broadcast from a remote source via a communications systems and decode and process the data to form video, audio and/or text data. A number of BDRs can be networked to a TFTP server to allow communication of data between the server and the BDRs. For example, the TFTP server can send updated information to all the BDRs of the network. In order for information to be sent from the server to the BDRs, the BDRs request a file to be downloaded from the headend of the server, the server then transfers the data to the BDRs and this is known as TFTP transfer.

If all or a number of the BDRs of a network power up together, for example after a code down load, the BDRs may typically all reach approximately the same point at which they require a TFTP transfer. This is likely to cause problems by overloading the server. In an attempt to avoid this problem, the BDRs are given a "backoff" period so that the BDR will wait a pre-determined period of time before attempting to perform a TFTP transfer. However, these backoff periods can still be similar.

It is therefore an aim of the present invention to provide an improved method of determining the time period/backoff period for data transfer from a server to and/or from a number of network devices.

According to a first aspect of the present invention there is provided a data transfer network comprising a TFTP server connected in a manner to allow the transfer of data to and from a number of network devices connected to the network, said network devices having a unique address including one or more digits for identifying each of said devices within the network, said data being transferred between said server and each of said devices at a pre-determined time and characterised in that the method for calculating the pre-determined time for transferring data from a device to and/or from the server is calculated by inputting one or more digits from said unique address of the device into a random number generator means.

In generating the transfer time limits or "back off" period in this way, the time intervals for transferring data from each device of the network to the server is staggered, thereby preventing the TFTP server from being overloaded by a number of devices transferring data at the same time to the server.

Preferably the devices in the network are broadcast data receivers.

Preferably the unique address is a Media Access Control (MAC) Address.

Preferably the results of said random number generator is/are fed into an equation which includes upper and lower transfer time limits, thereby producing a uniform pseudo random backoff period which has a uniform spread between the lower and upper transfer time limits.

In one embodiment the pseudo random number generator is provided by VxWorks, a realtime multi-threaded operating system provided by Wind River.

According to a second aspect of the present invention there is provided a data transfer network comprising a TFTP server connected to transfer data to and from a number of broadcast data receivers connected to the network, said broadcast data receivers having a unique MAC address to identify each of said receivers within the network, said data transferred between said server and each of said receivers at pre-determined time periods and characterised in that the method for calculating the pre-determined time period for transferring data from a receiver to and/or from the server is calculated by inputting one or more digits from said unique address of the receiver into a random generator means, the results of said random generator means determining, at least in part, the transfer time period.

An advantage of calculating the back off period using the present method is that each device is provided with a unique back off period which do not cluster in the given range of time limits and which does not require a hard code value for each receiver being calculated.

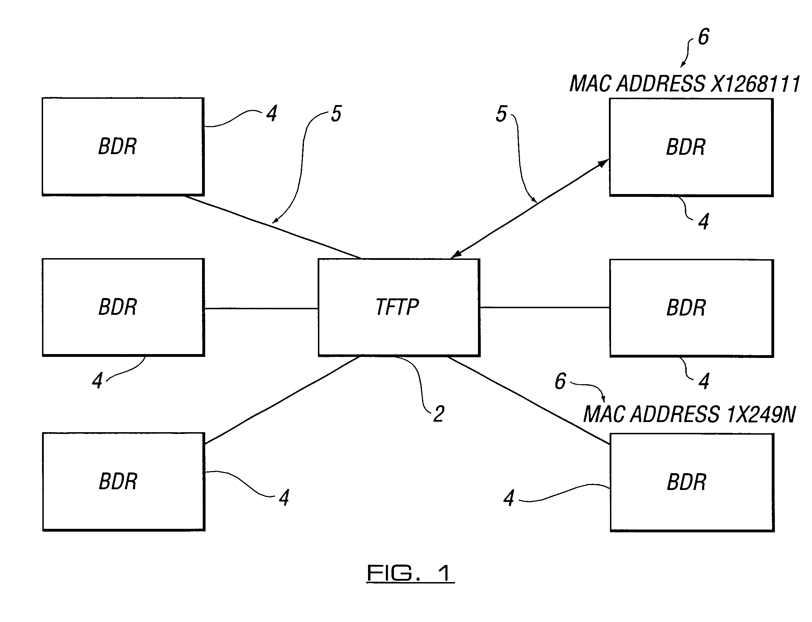

An embodiment of the present invention will now be described with reference to figure 1.

The use of a TFTP server 2 is well known for providing information in a communication network including a number of network devices in the form of broadcast data receivers (BDRs) 4.

The BDRs 4 include a means for receiving digital data which has been transmitted from a broadcaster at a remote location via cable, terrestrial or satellite transmission systems. The BDRs decode and process the received data to allow the generation of video, audio and/or auxiliary data. Each of the BDRs are provided with further communication means to allow them to form part of a networking system with the TFTP server 2. The server can thus communicate updated information or image data to all the receivers of the network. The receivers can also communicate data to the server 2, as shown by arrows 5.

Each of the BDRs has a unique address 6 (only examples of two addresses are shown in figure 1) called a Media Access Control (MAC) Address that identifies each of the BDRs within the network.

In accordance with one embodiment of the present invention, the last two bytes/digits of the MAC address are input into a pseudo random number generator provided by a software component called VxWorks. The resulting random number is fed into an equation to fit the result in the required specified time limit range.

For example, having obtained a random number(s) based on the MAC address (RAND) the equation is as follows:

$$\text{Backoff time period(ms)} = (RAND/(M/(H-I)) + I$$

Where:

Back off time period is the transfer time period/interval at which data is transferred from the BDR to the server, measured in milliseconds.
M is the maximum possible value of RAND
H is the higher transfer time limit in milliseconds
I is the lower transfer time limit in milliseconds

The calculated backoff period provides a time period having an even distribution between the upper and lower limits. The calculated back off periods for each BDR will be different and not sequential as with the prior art and therefore all the BDRs can do a TFTP data transfer to/from a single server without flooding that server. Even though the MAC addresses may be sequential, the resulting backoff periods will be non-sequential and significantly different.

In a calculated example:

The digits taken from the MAC address are odd numbers in the range 0-65535 (:00:00 to :ff:ff)
RAND is in the range 0-32767
M is 32767
H is 1800000ms (30 minutes)
I is 0ms
Thus

$$\text{Backoff Period} = (RAND/32767/(1800000-0) + 0$$

The results in this case give backoff periods which are a minimum of 55ms apart and consecutive MAC addresses have backoff periods that are 50 seconds apart. These figures are based on the fact that in one example, there are 65535 possible values for bytes 5 and 6 of the MAC address, and with some customers they only use odd values for byte 6. This means that there are only 32767 possible different values for bytes 5 and 6.

This translates into a 1:1 mapping between the MAC address and the output of the random function so the time span of 1800000ms divided by the number of different results, gives RAND as 54.9s.

Normal use of pseudo random number generators provides successive pseudo random numbers from a single root. The problem is that if BDRs use the same root, they will end up having the same back off period, thereby resulting in overloading of the server.

The customer in some cases has only 3 different values for byte 3 of the MAC address, which means that a maximum of three set top boxes will have the same backoff period. Due to the differences in the distance from the BDR to the headend of the TFTP server, variations in hardware and/or the like, the probability of the TFTP transfer of two or more BDRs being at exactly the same time is extremely low.

Thus the present invention provides a simple and inexpensive means of preventing over loading of the TFTP server during TFTP data transfers.

## Claims

1. A data transfer network comprising a TFTP server connected in a manner to allow the transfer of data to and from a number of network devices connected to the network, said network devices having a unique address including one or more digits for identifying each of said devices within the network, said data being transferred between said server and each of said devices at a pre-determined time and **characterised in that** the method for calculating the pre-determined time for transferring data from a device to and/or from the server is calculated by inputting one or more digits from said unique address of the device into a random number generator means.

2. A data transfer network according to claim 1 **characterised in that** the devices in the network are broadcast data receivers.

3. A data transfer network according to claim 1 **characterised in that** the unique address is a Media Access Control Address.

4. A data transfer network according to claim 1 **characterised in that** the last two bytes/digits of the MAC address are input into the random number generator means.

5. A data transfer network according to claim 1 **characterised in that** results (RAND) from the random number generation means are fed into an equation for calculating the back off time period (B) wherein:

$$B = (RAND/(M/H-I)) + I$$

B = back off time for transferring data from the BDR to the server;

M = maximum value of RAND

H = higher transfer time in milliseconds

I = lower transfer time in milliseconds

6. A data transfer network comprising a TFTP server connected to transfer data to and from a number of broadcast data receivers connected to the network, said broadcast data receivers having a unique MAC address to identify each of said receivers within the network, said data transferred between said server and each of said receivers at pre-determined time periods and **characterised in that** the method for calculating the pre-determined time period for transferring data from a receiver to and/or from the server is calculated by inputting one or more digits from said unique address of the receiver into a random generator means, the results of said random generator means determining, at least in part, the transfer time period.

FIG. 1

EP 1 248 436 A2